# EUROPÄISCHE PATENTSCHRIFT

(11) **EP 1 270 961 B1**
(45) Veröffentlichungstag und Bekanntmachung des Hinweises auf die Patenterteilung: **14.02.2007**
(21) Anmeldenummer: 01810600.5
(22) Anmeldetag: 19.06.2001
(51) Int. Cl.: F16B 7/18, F16B 2/06

(54) **Satz von miteinander verschraubbaren Klemmteilen zur Verbindung von Rahmenteilen**
Assembly of mutually screwable clamps for connection of frame elements
Ensemble des pièces de serrage vissables les unes aux autres pour l'assemblage des cadres

(43) Veröffentlichungstag der Anmeldung: 02.01.2003
(73) Patentinhaber: Schmidlin, Reinhard, 3125 Toffen (CH)
(72) Erfinder: Schmidlin, Reinhard, 3125 Toffen (CH)
(74) Vertreter: AMMANN PATENTANWÄLTE AG BERN

(56) Entgegenhaltungen:
- EP-A- 0 093 265
- EP-A- 0 773 397
- DE-A- 2 728 021
- DE-C- 4 328 106
- FR-A- 2 602 838
- GB-A- 2 300 213
- NL-A- 6 709 624
- US-A- 3 901 613

## Beschreibung

Die vorliegende Erfindung bezieht sich auf einen Satz von miteinander verschraubbaren Klemmteilen zur Verbindung von Rahmenteilen gemäss Einleitung von Patentanspruch 1. Bei der vorliegenden Erfindung geht es u. a. auch darum, Rahmen, insbesondere Wechselrahmen, die als Teile von Wänden oder Faltwänden für Ausstellungsobjekte verwendet werden, derart miteinander zu verbinden, dass eine Vielzahl von Stellwänden oder Faltwänden erzeugt werden kann, die ohne grossen Aufwand beliebig zusammengestellt werden können.

Aus der EP-A-0 093 265 ist eine Metalltür bekannt, die Verbindungselemente mit Schrauben aufweist, wobei je zwei Verbindungsteile um Profilierungen einer Türzarge greifen und durch die Schraube verspannt werden. Eine solche Anordnung ist nicht für die Verbindung von Wechselrahmen und dergleichen verwendbar.

In der DE-C-43 28 106 ist eine Klemmbacke für eine Rohrhalterung offenbart, die eine Klemmnut zur Aufnahme eines Flansches aufweist, wobei die Klemmbacken durch eine Längsschraube verspannt werden. Auch diese für eine Rohrhalterung geschaffene Klemmbacke ist für die Verbindung von Wechselrahmen und dergleichen nicht geeignet.

Es ist davon ausgehend Aufgabe der vorliegenden Erfindung, einen Satz von verschraubbaren Klemmteilen zur Verbindung von Rahmenteilen, die als Teile von Wänden oder Faltwänden für Ausstellungsobjekte verwendet werden können anzugeben, der einerseits aus einer geringen Anzahl von einfachen Klemmteilen aufgebaut ist und andererseits eine sehr grosse Vielfalt von Anwendungsmöglichkeiten erlaubt. Diese Aufgabe wird mit dem Satz gemäss Patentanspruch 1 gelöst.

Weiterausbildungen und weitere Vorteile dieses Satzes von Klemmteilen sind in den abhängigen Ansprüchen definiert.

Die Erfindung wird im Folgenden anhand von Zeichnungen von Ausführungsbeispielen näher erläutert.
- Fig. 1: zeigt ein erstes Ausführungsbeispiel von zwei Klemmteilen in Seitenansicht und teilweise geschnitten,
- Fig. 2: zeigt die Klemmteile von Fig. 1 in einer Sicht von oben,
- Fig. 3: zeigt das Ausführungsbeispiel gemäss Fig. 1 mit zwei verbundenen Rahmenteilen,
- Fig. 4: zeigt das Ausführungsbeispiel von Fig. 3 mit zwei anderen verbundenen Rahmenteilen,
- Fig. 5: zeigt das Beispiel gemäss Fig. 3 aus einer anderen Sicht und in einem anderen Massstab,
- Fig. 6: zeigt eine der möglichen Verbindungsarten von zwei Rahmenteilen mit dem Ausführungsbeispiel gemäss Fig. 1 und in einer anderen Sicht,
- Fig. 7: zeigt die gleichen Klemmteile wie in Fig. 6 mit anderen Rahmenteilen,
- Fig. 8: zeigt eine sternförmige Verbindung von vier Rahmenteilen mittels vier ersten Klemmteilen,
- Fig. 9: zeigt eine sternförmige Verbindung von drei Rahmenteilen mit drei ersten Klemmteilen,
- Fig. 10: zeigt eine weitere Verbindungsmöglichkeit mit anderen Klemmteilen,
- Fig. 11: zeigt eine Ausführungsvariante der Klemmteile mit einem Scharnier,
- Fig. 12: zeigt eine Verbindungsmöglichkeit mit einem Wechselrahmen mit Innenschenkeln,
- die Fig. 14 - 16: zeigen ein weiteres Ausführungsbeispiel für die Verbindung von zwei Eckrahmenteilen mit Gehrung, wobei Fig. 14 eine Frontansicht und Fig. 15 eine Seitenansicht der Klemmteile sowie Fig. 16 eine Verbindung damit von zwei Rahmenteilen darstellen,
- die Fig. 17 - 19: zeigen ein weiteres Ausführungsbeispiel für eine Eckverbindung, wobei Fig. 14 eine Frontansicht und Fig. 15 eine Seitenansicht der Klemmteile sowie Fig. 16 eine Verbindung damit von zwei Rahmenteilen darstellen, und
- Fig. 20: zeigt eine weitere, tablarartige Verbindung von Rahmenteilen.

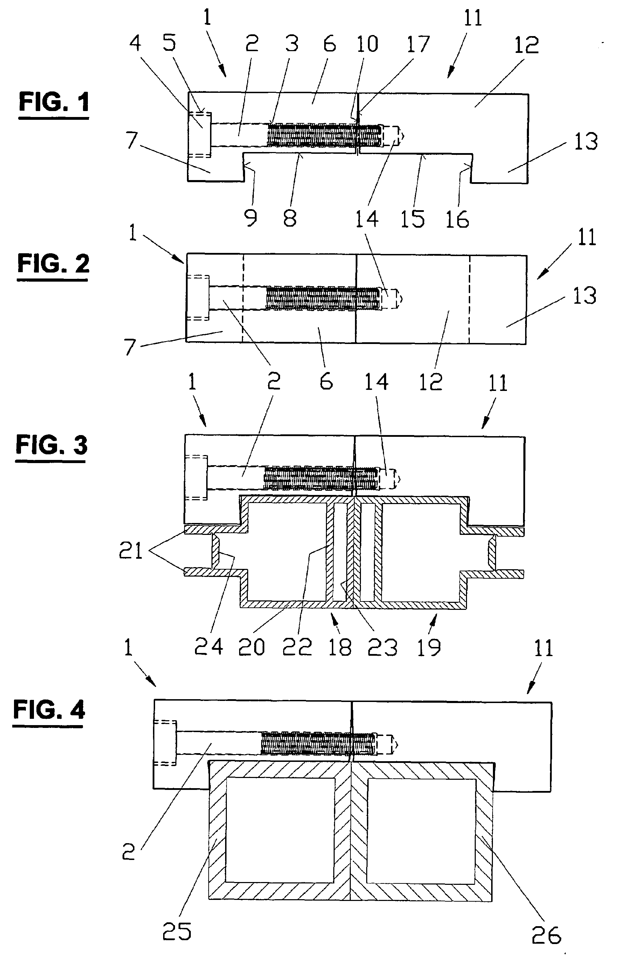

Der Satz von Klemmteilen zur Verbindung von Rahmenteilen besteht aus einigen wenigen Elementen, wobei in den Fig. 1-7 eine Verbindung mittels zwei Klemmteilen dargestellt ist, die bereits eine Vielzahl von Verbindungsmöglichkeiten ermöglicht.

In Fig. 1 erkennt man das erste Klemmteil 1 mit einer Schraube 2, die in einer Gewindebohrung 3 aufgenommen ist und deren Kopf 4 in einer entsprechenden Ausnehmung 5 versenkt ist. Das L-förmige Klemmteil 1 weist einen langen Stegschenkel 6 sowie einen kurzen Klemmschenkel 7 auf, wobei die Stegfläche 8 des Stegschenkels 6 und die Klemmfläche 9 des Klemmschenkels 7 nicht in einem rechten Winkel zueinander stehen, sondern in einem Winkel, der kleiner als 90° ist. In der Regel genügen einige wenige Grad Abweichung, um die beste Klemmwirkung zu erzielen, da die grösste Klemmwirkung von den Enden der Klemmflächen erzielt wird.

Wie aus den Fig. 1, 3 oder 4 hervorgeht, ist auch die Verbindungsfläche 10, die an das zweite Klemmteil anstösst, nicht rechtwinklig zur Stegfläche 8 angeordnet, sondern sie bildet einen Winkel, der grösser als 90° ist. Dies gestattet einerseits, die Klemmwirkung zu erhöhen und andererseits, Massungenauigkeiten der zu verbindenden Rahmenteile auszugleichen.

Gemäss den Fig. 1-7 weist das zweite Klemmteil 11 ebenfalls einen Stegschenkel 12 sowie einen Klemmschenkel 13 auf, wobei der Stegschenkel 12 eine Gewindebohrung 14 aufweist, um die Schraube 2 aufzunehmen, wobei diese Bohrung im allgemeinen eine Sackbohrung ist. Der Stegschenkel 12 weist ebenfalls eine Stegfläche 15 sowie eine Klemmfläche 16 auf, die miteinander einen Winkel bilden, der kleiner als 90° ist. Aus Fertigungsgründen sind die Klemmteile 1 und 11 in der Regel bis auf die Gewindebohrung identisch. Die Verbindungsfläche 17 weist ebenfalls in Bezug auf die Stegfläche 15 einen Winkel von grösser 90° auf.

Aus Figur 1 ist ersichtlich, dass die beiden Klemmteile an den Verbindungsflächen einen Winkel bilden, dessen Spitze sich an der der Stegfläche entgegengesetzten Seite befindet, so dass die Klemmwirkung erst voll entfaltet wird, wenn sich die beiden Klemmteile an der Spitze des Winkels berühren und die Klemmteile anschliessend zusammengezogen werden. Diese Bewegung wird dadurch unterstützt, dass die Schraube im ersten Klemmteil und die Gewindebohrung im zweiten Klemmteil in Bezug auf deren Mittelachse exzentrisch angeordnet sind.

In Fig. 3 ist ein erstes Ausführungsbeispiel einer Verbindung angegeben, wobei die beiden Klemmteile 1 und 11 zwei Rahmenteile miteinander verbinden, wie sie in der nicht vorveröffentlichten europäischen Anmeldung Nr. 00810713.8 beschrieben sind und die einen Wechselrahmen ergeben. Die dort beschriebenen Profilrahmenteile 18 und 19 weisen je einen rechteckigen Körper 20 auf, der an einer Seite eine Öffnung mit zwei offenen Schenkeln 21 aufweist, die aus dem Körper herausragen und im zusammengesetzten Zustand in das Wechselrahmen-Innere weisen, um ein Bild aufzunehmen. Gegenüber der Seite mit den Schenkeln befindet sich eine Innenwand 22 sowie eine Rückwand 23. Etwa in der Hälfte der offenen Schenkel ist ein mit Sollbruchstellen mit den beiden Schenkeln verbundener Steg 24 angeordnet. Das Profil ist derart gestaltet, dass einerseits der Steg 24 bei Bedarf leicht entfernt werden kann und andererseits die Innenwand 22 die Möglichkeit bietet, ein versenktes Wechselscharnier anzubringen, wobei lediglich die Rückwand 23 an dem Ort des Scharniers zu entfernen ist.

Die beiden Klemmteile 1 und 11 umfassen gemäss Fig. 3 die beiden Rahmenteile 18 und 19 und werden über die Schraube 2 miteinander fest verbunden. Dabei drücken, wie bereits erwähnt, die Klemmflächenenden auf die Aussenflächen des Körpers 20 der Rahmenteile, wodurch ein fester, unverrutschbarer Halt der Klemmteile gewährleistet ist sowie ein festes aneinander Klemmen beider Rahmenteile.

In Fig. 4 ist dargestellt, dass die Erfindung nicht nur auf die Verbindung eines speziellen Rahmenprofils gerichtet ist, sondern vielmehr eine Vielfalt von Profilen miteinander verbunden werden können, so zum Beispiel Rahmenteile 25 und 26 mit einem quadratischen Querschnitt. Davon ausgehend ist es verständlich, dass die Klemmteile bzw. deren Steg und Klemmfläche an eine sehr grosse Vielfalt von Rahmenteilen angepasst werden können, wobei die zu verbindenden Rahmenteile nicht die gleiche Dimension aufweisen müssen und nicht überall, sondern nur an den zu verbindenden Stellen, eben ausgebildet sein müssen.

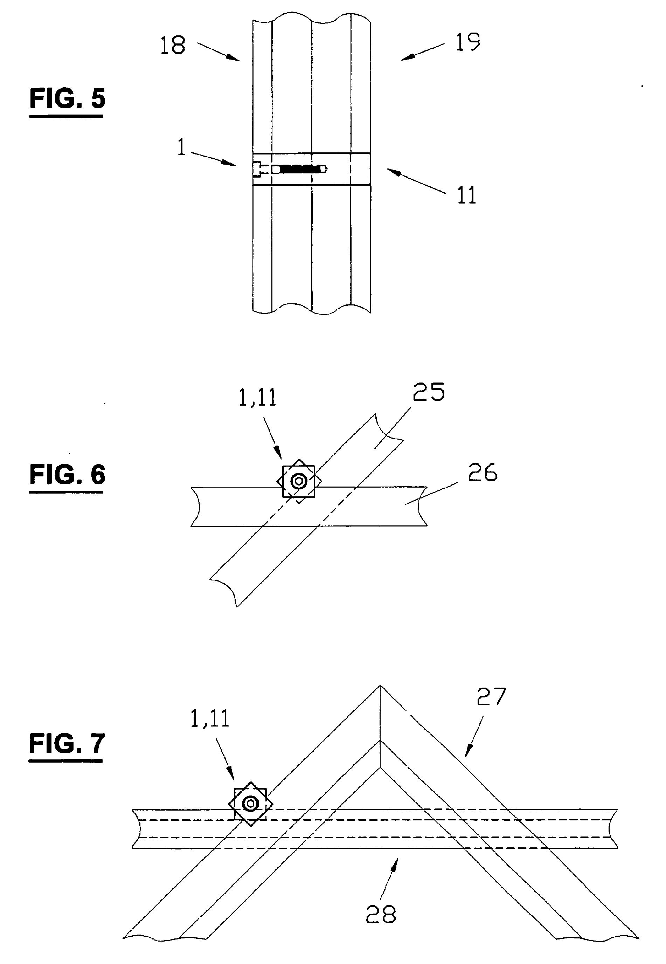

In Fig. 5 ist die Verbindung gemäss Fig. 3 von oben gesehen dargestellt und man erkennt, dass die beiden Rahmenteile parallel zueinander befestigt sind.

In Fig. 6 ist dargestellt, dass dadurch, dass die beiden Klemmteile 1 und 11 nur über die Schraube 2 miteinander verbunden sind, diese gegeneinander drehbar sind und dadurch die zwei Rahmenteile 25 und 26, oder irgend andere Rahmenteile, in irgend eine beliebige Winkellage zueinander befestigt werden können.

In Fig. 7 ist als Variante dargestellt, dass mittels der Klemmteile 1 und 11 ein Rahmen 27 in eine beliebige Winkellage zu einem anderen Rahmen 28 befestigt werden kann.

In den Fällen, in denen die Rahmenteile nicht parallel zueinander befestigt werden und die beiden Klemmteile gegeneinander verdreht sind, übernehmen die Verbindungsflächen 10 und 17 die Rolle der zweiten Klemmfläche, so dass die Befestigung eines Rahmenteils zwischen einer Klemmfläche und einer Verbindungsfläche stattfindet. Da die Verbindungsfläche zur Stegfläche einen Winkel aufweist, wird die gleiche Klemmwirkung wie zwischen den zwei Klemmteilen 1 und 11 erzielt.

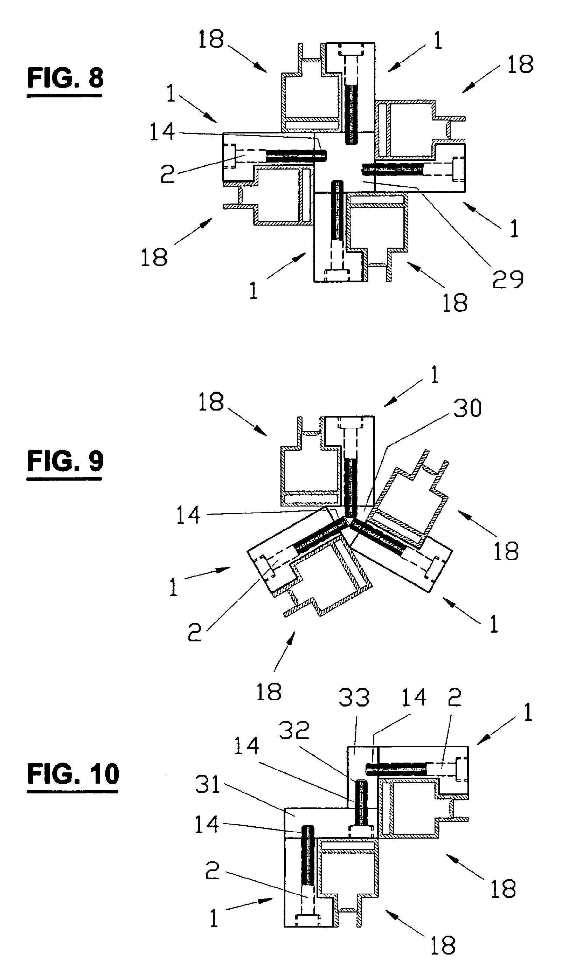

In den Fig. 8 bis 20 sind, ausgehend vom Grundgedanken gemäss Fig. 1, Weiterentwicklungen und Varianten der verschiedenen Klemmteile dargestellt. In Fig. 8 ist eine sternförmige Verbindung von vier Rahmenteilen 18 oder 19 dargestellt, wobei für die vier Verbindungen jeweils das Klemmteil 1 verwendet wird, und alle vier Klemmteile 1 mit einem Klemmteil 29 verbunden sind, das vier Gewindebohrungen 14 zur Aufnahme der Schrauben 2 aufweist. Die Anlageflächen des Würfels 29, die die Klemmflächen bilden, sind jeweils grösser als die Klemmflächen 9 am Klemmteil 1, womit eine sichere Klemmung gewährleistet wird, wobei die Anlageflächen des Würfels mit den geneigten Verbindungsflächen des ersten Klemmteils zusammenwirken.

Analog zur Viererverbindung von Fig. 8 ist in Fig. 9 eine sternförmige Dreiecksverbindung angegeben, wobei drei Klemmteile 1 mit einem Klemmteil 30 mit drei Gewindebohrungen 14 verbunden sind, das einen dreieckigen Grundriss aufweist. Analog dem Würfel oder Quader gemäss Fig. 8 sind die Anlageflächen von Klemmteil 30 zwar eben, jedoch ist die Verbindungsfläche vom ersten Klemmteil geneigt, um eine gute Klemmwirkung zu erzielen.

In Fig. 10 ist die Befestigung von zwei Rahmenteilen oder Rahmen dargestellt, die rechtwinklig zueinander angeordnet sind, ohne dass ein Spalt sichtbar wird. Die Rahmen 18 sind mit Klemmteilen 1 befestigt, wobei das eine erste Klemmteil 1 mit einem quaderförmigen zweiten Klemmteil 31 zusammenarbeitet, das eine Schraube 32 enthält, die in eine Gewindebohrung eines weiteren zweiten Klemmteils 33 reicht, um die beiden zweiten Klemmteile miteinander rechtwinklig zu verbinden. Im kürzeren zweiten Klemmteil 33 ist ebenfalls die Gewindebohrung 14 angebracht, um Schraube 2 aufzunehmen und das Rahmenteil 18 festzuklemmen.

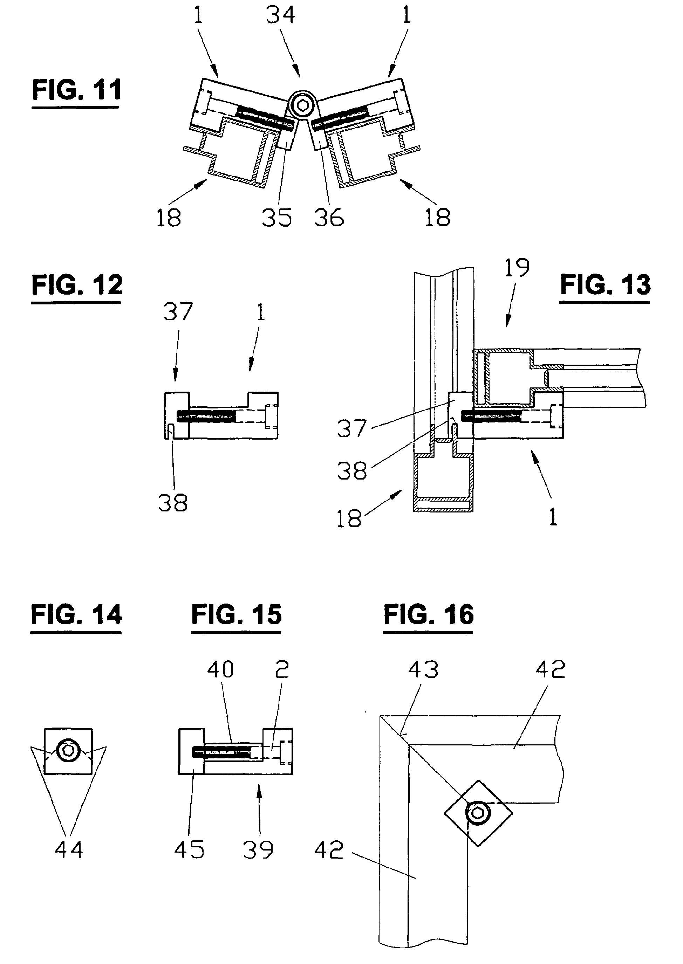

In Fig. 11 sind zwei Klemmteile 1 über ein Scharnier 34 miteinander verbunden, wobei die Scharnierschenkel 35 und 36 mit der Gewindebohrung 14 je als zweites Klemmteil wirken, welches die Schraube 2 aufnimmt, so dass die beiden Rahmenteilen vom ersten Klemmteil 1 und dem zweiten Klemmteil 35 oder 36 am Scharnier 34 festgehalten werden. Da Klemmteil 1 mit dem zweiten Klemmteil über die Schraube 2 miteinander verbunden sind, ist es auch hier möglich, die Rahmenteile beim Scharnier nicht nur parallel zueinander, sondern auch in einem beliebigen Winkel zueinander zu befestigen. Ausserdem kann das Scharnier in jeder beliebigen Öffnungsstellung arretiert werden.

In Fig. 12 ist eine besondere Ausführungsvariante der Klemmteile dargestellt, wobei das erste Klemmteil 1 wie vorgehend verwendet wird, während das zweite Klemmteil 37 quaderförmig ausgebildet ist und eine Nut 38 aufweist, die auf einen Schenkel 21 von Rahmenteil 18 oder 19 aufsteckbar ist, wie dies aus Fig. 13 hervorgeht. Dadurch kann eine rechtwinklige Verbindung zwischen zwei Rahmenteilen hergestellt werden, indem Rahmenteil 19 von Klemmteil 1 und dem Klemmteil 37 mit der Stirnseite derart erfasst wird, dass dieser Rahmenteil 19 am Rahmenteil 18 anliegt.

In den Fig. 14 bis 16 ist eine weitere Variante dargestellt, um zwei Rahmenteile 41 und 42 mit Gehrung 43 miteinander zu verbinden. Das erste Klemmteil 39 weist in Abweichung vom ersten Klemmteil 1 einen Stegschenkel 40 mit zwei im Winkel von 90° angeordneten Anlageflächen 44 auf, auf die die Innenkanten der Rahmenteile aufliegen, um einen rechten Winkel zu bilden. Das zweite Klemmteil kann als rechteckiges oder quaderförmiges Teil 45 ausgebildet sein oder wie das Teil 37 von Fig. 12.

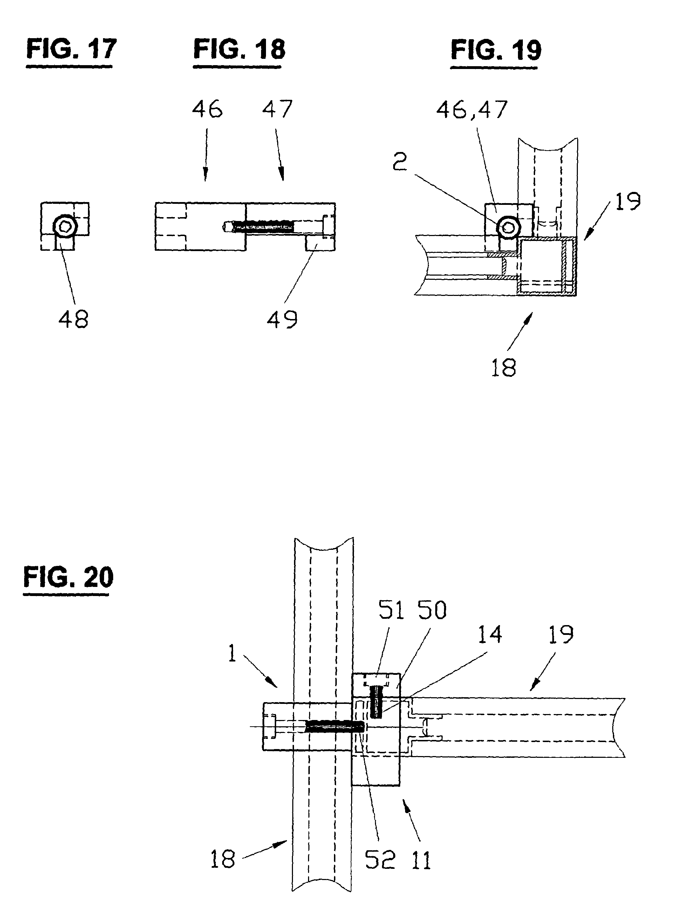

In den Fig. 17 bis 19 ist eine Ausführungsvariante zu den Klemmteilen 1 und 11 der Fig. 1 dargestellt, indem beim ersten Klemmteil 46 mit der Schraube 2 und beim zweiten Klemmteil 47 mit der Sackbohrung die beiden Klemmschenkeln 48 und 49 nur aus je einem mittleren Steg bestehen, wie dies aus den Fig. 17 und 18 hervorgeht. Dadurch ist es möglich, beim speziellen Rahmenprofil 18 und 19 die Klemmteile derart anzulegen, dass eine Eckverbindung ohne Spalt entsteht. Dabei ist das erste Klemmteil gegenüber dem zweiten Klemmteil um 90° verdreht.

In Fig. 20 ist eine weitere Variante der Klemmteile dargestellt. Das erste Klemmteil 1 stösst mit seiner Verbindungsfläche 10 nicht auf eine weitere Verbindungsfläche eines zweiten Klemmteils 11, sondern ist senkrecht zum Stegschenkel 15 mit Schraube 2 in Gewindebohrung 52 an diesem befestigbar. Das zweite Klemmteil 11 wirkt mit einem weiteren Klemmteil 50 mit Schraube 51 zusammen, wobei die Schraube 51 in der Gewindebohrung 14 anziehbar ist. Durch diese tablarförmigen Klemmstücke kann ein Rahmenteil 18 senkrecht zu einem anderen Rahmenteil 19 befestigt werden.

Aus obiger Beschreibung einer begrenzten Anzahl von Beispielen folgt die enorme Vielfalt von Varianten und Anwendungsmöglichkeiten, da im Rahmen des allgemeinen Erfindungsgedanken weder die Dimensionen der einzelnen Klemmteile oder Elemente dieser Klemmteile noch das Material eine Rolle spielt. So können die Klemmteile ganz oder teilweise aus Metall oder Kunststoff hergestellt sein und auch die Rahmenteile aus unterschiedlichen Materialien gefertigt sein und vielfältig anwendbar, z. B. für Stellwände und dergleichen Ausstellungsgegenstände, aber auch für Fenster-, Tür- oder Bilderrahmen.

## Patentansprüche

1. Satz von miteinander verschraubbaren Klemmteilen zur Verbindung von Rahmenteilen, enthaltend ein erstes, eine Schraube (2) aufweisendes Klemmteil (1, 37, 46) und mindestens ein weiteres Klemmteil (11, 29, 30, 31, 33, 35, 36, 37, 45, 47, 50) mit einer Gewindebohrung (14) zur Aufnahme der Schraube, wobei die Klemmteile über anliegende Verbindungsflächen (10, 17) derart angeordnet sind, dass das erste Klemmteil mit dem weiteren Klemmteil eine etwa U-förmige Klemmöffnung mit zwei Klemmschenkeln und einem Verbindungssteg zur Aufnahme von Rahmenteilen (18, 19; 25, 26) erzeugt, wobei die Schraube im Wesentlichen parallel zu den Stegflächen (8, 15) des Verbindungssteges (6, 12) angeordnet ist, die Klemmfläche (9) des Klemmschenkels (7, 48) des ersten Klemmteils mit der Stegfläche (8) einen Winkel bildet, der kleiner als 90° ist und die Verbindungsflächen (10, 17) einen Winkel bilden, der grösser als 0° ist.

2. Satz gemäss Anspruch 1, **dadurch gekennzeichnet, dass** die Verbindungsfläche (10) des ersten Klemmteils mit der Stegfläche (8) einen Winkel bildet, der grösser als 90° ist.

3. Satz gemäss Anspruch 1 oder 2, **dadurch gekennzeichnet, dass** die Schraube (2) im ersten Klemmteil und die Gewindebohrung (14) im weiteren Klemmteil in Bezug auf die Mittelachse exzentrisch angeordnet sind.

4. Satz gemäss einem der Ansprüche 1 bis 3, **dadurch gekennzeichnet, dass** die Klemmfläche (16) des Klemmschenkels (13) des zweiten Klemmteils (11) mit seiner Stegfläche (15) einen Winkel bildet, der kleiner als 90° ist.

5. Satz gemäss Anspruch 4, **dadurch gekennzeichnet, dass** die Verbindungsfläche (17) des zweiten Klemmteils (11) mit der Stegfläche (15) einen Winkel bildet, der grösser als 90° ist.

6. Satz gemäss einem der Ansprüche 1 bis 3, **dadurch gekennzeichnet, dass** das zweite Klemmteil (29) quaderförmig ausgebildet ist und an vier Seiten eine Gewindebohrung (14) zur Aufnahme der Schraube (2) aufweist.

7. Satz gemäss einem der Ansprüche 1 bis 3, **dadurch gekennzeichnet, dass** das zweite Klemmteil (30) einen dreieckigen Querschnitt aufweist und die drei Dreiecksseiten je eine Gewindebohrung (14) zur Aufnahme der Schraube (2) aufweisen.

8. Satz gemäss einem der Ansprüche 1 bis 3, **dadurch gekennzeichnet, dass** das zweite Klemmteil (31, 33) als Platte ausgebildet ist, die mindestens eine Gewindebohrung (14) zur Aufnahme der Schraube (2, 32) aufweist.

9. Satz gemäss einem der Ansprüche 1 bis 3, **dadurch gekennzeichnet, dass** zwei weitere Klemmteile (35, 36) als Schenkel eines Scharniers (34) ausgebildet sind.

10. Satz gemäss einem der Ansprüche 1 bis 9, **dadurch gekennzeichnet, dass** der Stegschenkel (40) des ersten Klemmteils (39) zwei einen Winkel von 90° bildende Flächen (44) aufweist.

11. Satz gemäss einem der Ansprüche 1 bis 10, **dadurch gekennzeichnet, dass** das weitere Klemmteil (11) eine zusätzliche Gewindebohrung (52) aufweist, die senkrecht zur anderen Gewindebohrung (14) steht.

12. Satz gemäss einem der Ansprüche 1 bis 11 zum Verbinden von Rahmenteilen (18, 19), die einen Körper (20) mit an einer Seite eine Öffnung mit zwei offenen Schenkeln (21) aufweisen, **dadurch gekennzeichnet, dass** das weitere Klemmteil (37) eine Nut (38) zur Aufnahme eines Schenkels (21) aufweist.

13. Satz gemäss Anspruch 12, **dadurch gekennzeichnet, dass** die Klemmschenkel des ersten (46) und des weiteren Klemmteils (47) als in der Mitte angeordnete Stege (48, 49) ausgebildet sind.

## Claims

1. Set of mutually screwable clamping parts for connection of frame elements, comprising a first clamping part (1, 37, 46) having a screw (2) and at least another clamping part (11, 29, 30, 31, 33, 35, 36, 37, 45, 47, 50) having a threaded hole (14) for receiving the screw, the clamping parts being assembled via abutting junction surfaces (10, 17) in such a manner that the first clamping part and the additional clamping part together form an approximately U-shaped clamping opening having two clamping legs and a connecting web for receiving frame elements (18, 19; 25, 26), the screw being arranged essentially parallel to the web surfaces (8, 15) of the connecting web (6, 12), the clamping surface (9) of the clamping leg (7, 48) of the first clamping part and the web surface (8) forming an angle that is smaller than 90°, and the junction surfaces (10, 17) forming an angle that is greater than 0°.

2. Set according to claim 1, **characterised in that** the junction surface (10) of the first clamping part and the web surface (8) form an angle that is greater than 90°.

3. Set according to claim 1 or 2, **characterised in that** the screw (2) in the first clamping part and the threaded hole (14) in the additional clamping part are arranged eccentrically with respect to the centre line.

4. Set according to one of claims 1 to 3, **characterised in that** the clamping surface (16) of the clamping leg (13) of the second clamping part (11) and its web surface (15) form an angle that is smaller than 90°.

5. Set according to claim 4, **characterised in that** the junction surface (17) of the second clamping part (11) and the web surface (15) form an angle that is greater than 90°.

6. Set according to one of claims 1 to 3, **characterised in that** the second clamping part (29) is cuboidally shaped and provided with threaded holes (14) for receiving the screw (2) on four sides.

7. Set according to one of claims 1 to 3, **characterised in that** the second clamping part (30) has a triangular cross-section and the three sides of the triangle each have a threaded hole (14) for receiving the screw (2).

8. Set according to one of claims 1 to 3, **characterised in that** the second clamping part (31, 33) is in the shape of a plate having at least one threaded hole (14) for receiving the screw (2, 32).

9. Set according to one of claims 1 to 3, **characterised in that** two additional clamping parts (35, 36) are designed as shanks of a hinge (34).

10. Set according to one of claims 1 to 9, **characterised in that** the web leg (40) of the first clamping part (39) has two surfaces (44) forming an angle of 90°.

11. Set according to one of claims 1 to 10, **characterised in that** the additional clamping part (11) has an additional threaded hole (52) that is orthogonal to the other threaded hole (14).

12. Set according to one of claims 1 to 11 for connecting frame elements (18, 19) having a body (20) provided on one side with an opening with two open legs (21), **characterised in that** the additional clamping part (37) has a groove (38) for receiving one of the legs (21).

13. Set according to claim 12, **characterised in that** the clamping legs of the first (46) and of the additional clamping part (47) are designed as centrally arranged webs (48, 49).

## Revendications

1. Jeu de pièces de serrage vissables les unes aux autres pour l'assemblage d'éléments de cadre, comprenant une première pièce de serrage (1, 37, 46) munie d'une vis (2) et au moins une pièce de serrage (11, 29, 30, 31, 33, 35, 36, 37, 45, 47, 50) supplémentaire munie d'un trou fileté (14) destiné à recevoir la vis, les pièces de serrage étant assemblées par l'intermédiaire de surfaces de jonction (10, 17) attenantes de telle manière que la première pièce de serrage forme avec la pièce de serrage supplémentaire une ouverture de serrage en forme approximativement d'U avec deux ailes de serrage et une barrette de liaison, destinée à recevoir des éléments de cadre (18, 19; 25, 26), la vis étant agencée essentiellement parallèlement aux surfaces (8, 15) de la barrette de liaison (6, 12), la surface de serrage (9) de l'aile de serrage (7, 48) de la première pièce de serrage formant avec la surface (8) de la barrette un angle qui est inférieur à 90° et les surfaces de jonction (10, 17) formant un angle qui est supérieur à 0°.

2. Jeu selon la revendication 1, **caractérisé en ce que** la surface de jonction (10) de la première pièce de serrage forme avec la surface (8) de la barrette un angle qui est supérieur à 90°.

3. Jeu selon la revendication 1 ou 2, **caractérisé en ce que** la vis (2) dans la première pièce de serrage et le trou fileté (14) dans la pièce de serrage supplémentaire sont agencés excentriquement par rapport à l'axe médian.

4. Jeu selon l'une des revendications 1 à 3, **caractérisé en ce que** la surface de serrage (16) de l'aile de serrage (13) de la deuxième pièce de serrage (11) forme avec la surface (15) de sa barrette un angle qui est inférieur à 90°.

5. Jeu selon la revendication 4, **caractérisé en ce que** la surface de jonction (17) de la deuxième pièce de serrage (11) forme avec la surface (15) de la barrette un angle qui est supérieur à 90°.

6. Jeu selon l'une des revendications 1 à 3, **caractérisé en ce que** la deuxième pièce de serrage (29) est réalisée sous forme cuboïdale et présente sur quatre côtés un trou fileté (14) pour recevoir la vis (2).

7. Jeu selon l'une des revendications 1 à 3, **caractérisé en ce que** la deuxième pièce de serrage (30) présente une coupe transversale triangulaire et les trois côtés du triangle présentent chaque fois un trou fileté (14) pour recevoir la vis (2).

8. Jeu selon l'une des revendications 1 à 3, **caractérisé en ce que** la deuxième pièce de serrage (31, 33) est réalisée sous la forme d'une plaque qui présente au moins un trou fileté (14) pour recevoir la vis (2, 32).

9. Jeu selon l'une des revendications 1 à 3, **caractérisé en ce que** deux pièces de serrage (35, 36) supplémentaires sont réalisées sous la forme de branches d'une charnière (34).

10. Jeu selon l'une des revendications 1 à 9, **caractérisé en ce que** la barrette (40) de la première pièce de serrage (39) présente deux surfaces (44) formant un angle de 90°.

11. Jeu selon l'une des revendications 1 à 10, **caractérisé en ce que** la pièce de serrage (11) supplémentaire présente un trou fileté (52) supplémentaire qui est perpendiculaire à l'autre trou fileté (14).

12. Jeu selon l'une des revendications 1 à 11 pour l'assemblage d'éléments de cadre (18, 19) ayant un corps (20) qui présente d'un côté une ouverture avec deux ailes (21) ouvertes, **caractérisé en ce que** la pièce de serrage (37) supplémentaire comporte une rainure (38) destinée à recevoir l'une des branches (21).

13. Jeu selon la revendication 12, **caractérisé en ce que** les ailes de serrage de la première pièce de serrage (46) et de la pièce de serrage supplémentaire (47) sont réalisées sous la forme de barrettes (48, 49) centrales.
